# EUROPEAN PATENT SPECIFICATION

(11) **EP 3 277 025 B1**
(45) Date of publication and mention of the grant of the patent: **01.01.2020**
(21) Application number: 15887127.7
(22) Date of filing: 27.07.2015
(51) Int. Cl.: H04W 36/32, H04W 24/02, H04W 16/28, H04W 36/00

(54) **METHOD AND DEVICE FOR ADJUSTING HANDOVER AREA ALONG A HIGH-SPEED RAILWAY LINE, AND COMPUTER STORAGE MEDIUM**
VERFAHREN UND VORRICHTUNG ZUR EINSTELLUNG EINES ÜBERGABEBEREICHS ENTLANG EINER BAHNSTRECKE UND COMPUTERSPEICHERMEDIUM
PROCÉDÉ ET DISPOSITIF D'AJUSTEMENT DE ZONE DE TRANSFERT LE LONG D'UNE LIGNE DE CHEMIN DE FER, ET SUPPORT DE STOCKAGE INFORMATIQUE

(30) Priority: 27.03.2015 CN 201510142662
(43) Date of publication of application: 31.01.2018
(73) Proprietor: ZTE Corporation, Shenzhen city, Guangdong 518057 (CN)
(72) Inventor: WANG, Zhong, Shenzhen Guangdong 518057 (CN); WANG, Xinghui, Shenzhen Guangdong 518057 (CN)
(74) Representative: Carangelo, Pierluigi
(86) International application number: PCT/CN2015/085178
(87) International publication number: WO 2016/155162

(56) References cited:
- EP-A2- 0 699 011
- CN-A- 102 271 374
- CN-A- 102 300 274
- CN-A- 103 096 403
- CN-A- 104 780 572
- CN-A- 104 780 572
- CN-B- 102 387 556
- KR-B1- 101 499 700
- US-A1- 2012 044 824
- WANG, YONG ET AL.: 'Study on Optimal Handover Band on Multi-Carrier' SYSTEMS ENGINEERING AND ELECTRONICS vol. 31, no. 3, 31 March 2009, pages 518 - 522 AND 530, XP009501718

## Description

### Technical Field

The present disclosure relates to technologies concerning handover areas in the field of communications, and in particular to a method and a device for adjusting a handover area, and a computer storage medium.

### Background

With the continuous increase of speed of high-speed railway, current mobile communication systems dedicated for railway (also referred to as railway private mobile communication systems) cannot meet requirements of reliability and instantaneity. Under high-speed scenarios, wireless communication environments may be relatively worse, and problems such as signal attenuation, Doppler shift and handover may exist. Among various existing problems, a handover problem of handing over from one cell to another cell may be especially prominent. A handover procedure may include four stages, respectively being measurement, selection, decision and execution. A period of time may be needed from the initiation to the completion of the handover procedure. As a result, with the acceleration of the running speed of trains, the wireless environment may have changed greatly during this period of time, and this great change may bring a problem to the normal handover operation.

A handover area may refer to an overlapped coverage area between channels of two neighbor cells. In an original mechanism for configuring the handover area, a Base Station Subsystem (BSS) may confirm the reasonability of the handover area through a Drive Test (DT) and a field dial test, and the handover area may be fixed. If the handover area is too large, mutual interference is easy to be generated between a railway private network and a public network, causing the degradation of voice quality, even call drop. If the handover area is too small, private network users probably have not enough time to complete the handover procedure and therefore may suffer call drop when the train speed is too fast.

Publication KR101499700 B1 discloses a smart antenna control method for using handover; CN102387556 B discloses a inter-cell handover method of train-ground communication based on cooperative multipoint transmission in high-speed mobile environment; US 2012044824 A1 discloses a controlling cell activation in a radio communication network; CN 104780572 A disclose a handover band adjusting method and device. However, the above cited problems still remain unresolved.

To sum up, no solution has been provided so far as for how to improve a success rate for handover of user terminals between cells in a train private network.

### Summary

Some embodiments of the present disclosure provide a method and a device for adjusting a handover area, and a computer storage medium, which may improve a success rate for handover of user terminals between cells in a train private network.

An embodiment of the present disclosure provides a method for adjusting a handover area, which may include the following acts.

Running information of a train may be acquired after the train starts.

A required handover area range of a target handover area which the train is about to enter may be determined based on the running information of the train.

A handover area range of the target handover area may be adjusted based on a comparison result between the required handover area range of the target handover area which the train is about to enter and a current handover area range of the target handover area.

In an embodiment, the act that the handover area range of the target handover area may be adjusted based on the comparison result between the required handover area range of the target handover area which the train is about to enter and the current handover area range of the target handover area may include the following acts.

A handover area size needed to be adjusted may be determined based on the required handover area range of the target handover area which the train is about to enter and the current handover area range of the target handover area.

An antenna down-tilt corresponding to the target handover area may be adjusted based on the handover area size needed to be adjusted.

In an embodiment, the running information of the train may include position information and speed information of the train. The act that the required handover area range of the target handover area which the train is about to enter may be determined based on the running information of the train may include the following acts.

The target handover area which the train is about to enter may be determined based on the position information of the train.

The required handover area range of the target handover area which the train is about to enter may be calculated based on the speed information of the train and a preset cell handover duration.

In an embodiment, the act that the required handover area range of the target handover area which the train is about to enter may be calculated based on the speed information of the train and the preset cell handover duration may include the following acts.

Whether at least one of an up train and a down train is about to enter the target handover area may be judged based on the speed information of at least one of the up train and the down train.

When the up train and the down train are about to enter the target handover area, the required handover area range of the target handover area which each train is about to enter may be calculated respectively based on the speed information of each train and the preset cell handover duration, and a bigger one of calculated handover area ranges may be determined to be the required handover area range of the target handover area which the train is about to enter.

Alternatively, when one of the up train and the down train is about to enter the target handover area, the required handover area range of the target handover area which the up train or the down train is about to enter may be calculated based on the speed information of the up train or the down train and the preset cell handover duration.

In an embodiment, after the handover area range of the target handover area is adjusted based on a comparison result between the required handover area range of the target handover area which the train is about to enter and the current handover area range of the target handover area, the method may further include the following act.

When there is no train passing the target handover area within a first preset time, the handover area range of the target handover area may be adjusted to be a preset handover area range.

In an embodiment, after the target handover area which the train is about to enter is determined based on the position information of the train, the method may further include the following act.

A channel of a target cell may be activated in advance by a second preset time.

Another embodiment of the present disclosure provides a device for adjusting a handover area, which may include: an information acquisition module, a handover area range determination module and a first adjustment module.

The information acquisition module may be configured to acquire running information of a train after the train starts.

The handover area range determination module may be configured to determine, based on the running information of the train, a required handover area range of a target handover area which the train is about to enter.

The first adjustment module may be configured to adjust a handover area range of the target handover area based on a comparison result between the required handover area range of the target handover area which the train is about to enter and a current handover area range of the target handover area.

In an embodiment, the first adjustment module may include: a determination unit and an adjustment unit.

The determination unit may be configured to determine a handover area size needed to be adjusted based on the required handover area range of the target handover area which the train is about to enter and the current handover area range of the target handover area.

The adjustment unit may be configured to adjust an antenna down-tilt corresponding to the target handover area based on the handover area size needed to be adjusted.

In an embodiment, the running information of the train may include position information and speed information of the train. The handover area range determination module may include: a target handover area determination unit and a calculation unit.

The target handover area determination unit may be configured to determine, based on the position information of the train, the target handover area which the train is about to enter.

The calculation unit may be configured to calculate, based on the speed information of the train and the preset cell handover duration, the required handover area range of the target handover area which the train is about to enter.

In an embodiment, the calculation unit may include: a judgment subunit and an adjustment subunit.

The judgment subunit may be configured to judge whether at least one of an up train and a down train is about to enter the target handover area based on the speed information of the train.

The adjustment subunit may be configured to: when the up train and the down train are about to enter the target handover area, respectively calculate, based on the speed information of each train and the preset cell handover duration, the required handover area range of the target handover area which each train is about to enter, and determine a bigger one of calculated handover area ranges to be the required handover area range of the target handover area which the train is about to enter.

Alternatively, the adjustment subunit may be configured to: when one of the up train and the down train is about to enter the target handover area, calculate, based on the speed information of the up train or the down train and the preset cell handover duration, the required handover area range of the target handover area which the up train or the down train is about to enter.

In an embodiment, the device for adjusting the handover area may further include a second adjustment module.

The second adjustment module may be configured to: when there is no train passing the target handover area within a first preset time, adjust the handover area range of the target handover area to be a preset handover area range.

In an embodiment, the handover area range determination module may further include an activation unit.

The activation unit may be configured to activate a channel of a target cell in advance by a second preset time.

Still another embodiment of the present disclosure provides a computer storage medium, storing an executable instruction that is configured to execute the method for adjusting the handover area described above.

In the solution provided in some embodiments of the present disclosure, a target handover area which a train is about to enter may be determined based on acquired running information of the train, a required handover area range of the target handover area which the train is about to enter may be calculated, the required handover area range of the target handover area which the train is about to enter may be compared with the current handover area range of the target handover area, a handover area size needed to be adjusted may be determined based on the comparison result, and the handover area range of the target handover area may be adjusted. By virtue of the solution, the handover area range of the target handover area may be adjusted adaptively based on different train running speeds, and a success rate for handover of user terminals between cells in a train private network during high-speed running process of trains may be improved. Meanwhile, mutual interference between the private network and the public network may be reduced.

### Brief Description of the Drawings

Fig. 1 is a flowchart illustrating a first embodiment of a method for adjusting a handover area according to an embodiment of the present disclosure.
Fig. 2 is a structure diagram illustrating handover area adjustment according to an embodiment of the present disclosure
Fig. 3 is a detailed flowchart illustrating the adjustment of a handover area range of a target handover area in the method for adjusting the handover area according to an embodiment of the present disclosure.
Fig. 4 is a detailed flowchart illustrating a first embodiment of determining a required handover area range of a target handover area which the train is about to enter in the method for adjusting the handover area according to an embodiment of the present disclosure.
Fig. 5 is a detailed flowchart illustrating the calculation of a required handover area range of a target handover area which the train is about to enter in the method for adjusting the handover area according to an embodiment of the present disclosure.
Fig. 6 is a flowchart illustrating a second embodiment of a method for adjusting a handover area according to an embodiment of the present disclosure.
Fig. 7 is a detailed flowchart illustrating a second embodiment of determining a required handover area range of a target handover area which the train is about to enter in the method for adjusting the handover area according to an embodiment of the present disclosure.
Fig. 8 is a function module diagram illustrating a first embodiment of a device for adjusting a handover area according to an embodiment of the present disclosure.
Fig. 9 is a function module diagram illustrating a first adjustment module in the device for adjusting the handover area according to an embodiment of the present disclosure.
Fig. 10 is a function module diagram illustrating a first embodiment of a handover area range determination module in the device for adjusting the handover area according to an embodiment of the present disclosure.
Fig. 11 is a function module diagram illustrating a calculation unit in the device for adjusting the handover area according to an embodiment of the present disclosure.
Fig. 12 is a function module diagram illustrating a second embodiment of a device for adjusting a handover area according to an embodiment of the present disclosure.
Fig. 13 is a function module diagram illustrating a second embodiment of the handover area range determination module in the device for adjusting the handover area according to an embodiment of the present disclosure.

### Detailed Description of the Embodiments

It should be understood that the embodiments described hereinafter are merely provided to illustrate the present disclosure, not to limit the present disclosure.

In a solution provided in some embodiments of the present disclosure, a target handover area which a train is about to enter may be determined based on acquired position information of the train after a train starts, and a channel of a target cell may be activated in advance. When the train runs to a preset position, a required handover area range of the target handover area which the train is about to enter may be calculated based on current running speed information of the train and a preset cell handover duration, and may be compared with a current handover area range of the target handover area to determine a handover area size needed to be adjusted. Then, an antenna down-tilt size needed to be adjusted may be determined based on a corresponding relationship between the handover area size needed to be adjusted and the antenna down-tilt. By virtue of the solution, different target handover areas may be provided for trains with different speeds, that is, the handover area range of the target handover area may be adjusted adaptively based on different train running speeds. Therefore, a success rate for handover of user terminals between cells in a train private network during high-speed running process of trains may be improved. In addition, when there is no train passing the target handover area within a first preset time, the handover area range of the target handover area may be adjusted to be a preset handover area range, thereby reducing the mutual interference between the private network and the public network.

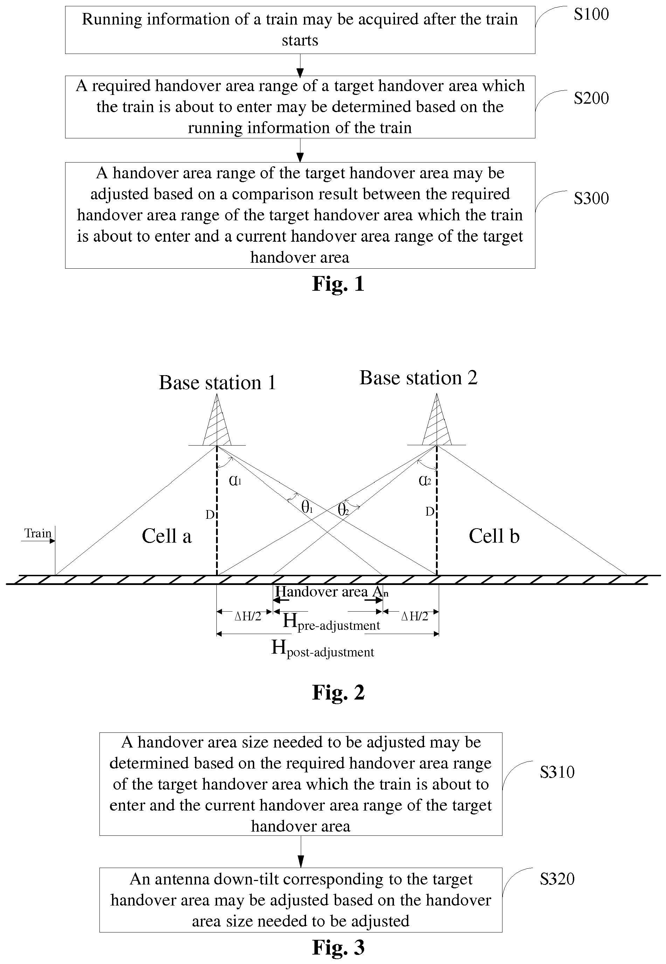

As shown in Fig. 1, a first embodiment of a method for adjusting a handover area of the present disclosure is provided. The method for adjusting the handover area in this embodiment may include the following acts S100 to S300.

At act S100, running information of a train may be acquired after the train starts.

At act S200, a required handover area range of a target handover area which the train is about to enter may be determined based on the running information of the train.

At act S300, the handover area range of the target handover area may be adjusted based on a comparison result between the required handover area range of the target handover area which the train is about to enter and a current handover area range of the target handover area.

While high-speed rail lines are established, private networks along the rail line may be planned, that is, positions of transceivers and distributions of antennas of base stations may be planned so as to form multiple cells. An overlapped coverage area of every two neighbor cells may form a handover area, and each handover area may correspond to a preset sequence number. As shown in Fig. 2, the overlapped coverage area of Cell a and Cell b may form one handover area.

In order to acquire the running information of the train, a Global Positioning System (GPS) system may be installed on the train. The GPS system may be configured to acquire, after the train starts, running information of the train, such as the position information and speed information of the train, so as to acquire the running state of the train. The running information of the train may alternatively be acquired through a GPS system of a private network user terminal on the train, for example, information such as the current position information and speed information of a mobile phone user on the train may be acquired to serve as the running information of the train. It may be appreciated that the running information of the train may alternatively be acquired through other ways. The position information of the train may be information about the geographic latitude and longitude where the train is located. The information about the latitude and longitude of the range of each cell and the range of each handover area on the high-speed rail line may be stored in a form of one or more lists, or, stored in other ways. Moreover, the range of the cell and the range of the handover area may be updated after being adjusted. The speed information of the train may include the running speed of the train and the running direction of the train. The running direction of the train may be used to judge whether the train is an up train or a down train. For example, after one direction is specified as an up direction of the train, the opposite direction may serve as a down direction of the train. The running information of the train may be acquired in real time through a GPS system, or may be acquired at preset interval. The preset interval may be set based on actual conditions, for example, the preset interval may be set as e.g., 1 second, or other time length.

In addition, the act of acquiring the running information of the train may be implemented in a following manner. When the train starts, the initial position information of the train and the initial running speed information of the train may be reported. During the running process of the train, when the running speed of the train changes, the current running speed information of the train may be reported in time so that the change of the running information of the train may be acquired.

After the running information of the train is obtained, the target handover area, for example, the sequence number of the handover area which the train is about to enter, may be determined based on a result of comparison between the information about the longitude and latitude where the train is located currently and the stored longitude and latitude information, as well as the speed information of the train. The handover area range required when the train enters the target handover area may be calculated. The required handover area range of the target handover area which the train is about to enter may be compared with the current handover area range of the target handover area, and the handover area range of the target handover area may be adjusted based on the comparison result, so that a user terminal of a train private network may successfully hand over from one cell to another cell.

In an embodiment of the present disclosure, after a train starts, running information of the train may be acquired, a target handover area which the train is about to enter may be determined based on the acquired running information of the train, a required handover area range of the target handover area which the train is about to enter may be determined, and a handover area range of the target handover area may be adjusted based on a comparison result between the required handover area range of the target handover area which the train is about to enter and the current handover area range of the target handover area. By virtue of this solution, dynamic adjustment for the handover area range of the target handover area based on different train running speeds may be realized, so that a success rate for handover of user terminals between cells in a train private network may be improved.

In an embodiment, as shown in Fig. 3, based on the above embodiment, in the method for adjusting the handover area, the above act S300 may include the following acts S310 and S320.

At act S310, a handover area size needed to be adjusted may be determined based on the required handover area range of the target handover area which the train is about to enter and the current handover area range of the target handover area.

At act S320, an antenna down-tilt corresponding to the target handover area may be adjusted based on the handover area size needed to be adjusted.

Since the environment along the high-speed rail line is complex and vertical distances between transceivers of different base stations and the high-speed rail line may be different, the handover area formed by the overlapped coverage area between every two neighbor cells may be different. Therefore, in this embodiment, it may be suggested to establish in advance a mapping relationship between an antenna down-tilt and a rail length for each handover area in the high-speed rail line based on the high-speed rail line and the antenna distributions. Herein, the rail length may refer to a rail length occupied by a corresponding handover area size, that is, the mapping relationship between the antenna down-tilt and the rail length may be equivalent to the mapping relationship between the antenna down-tilt and the handover area size. In this embodiment, the mapping relationship between the antenna down-tilt and the rail length is set in advance. The mapping relationship between the antenna down-tilt and the rail length may be set based on a corresponding rail length measured according to the value of the corresponding antenna down-tilt in the first handover area A₁, and a corresponding rail length measured according to the value of the corresponding antenna down-tilt in the second handover area A₂. The mapping relationship is as shown in Table 1.

**Table 1: mapping relationship between antenna down-tilt and rail length**

| | | | | | | | |
|---|---|---|---|---|---|---|---|
| First handover area A₁ | Antenna down-tilt | α₁ | α₂ | α₃ | α₄ | α₅ | α₆ |
| | Rail length | X₁ | X₂ | X₃ | X₄ | X₅ | X₆ |
| Second handover area A₂ | Antenna down-tilt | β₁ | β₂ | β₃ | β₄ | β₅ | β₆ |
| | Rail length | Y₁ | Y₂ | Y₃ | Y₄ | Y₅ | Y₆ |

The mapping relationship between the antenna down-tilt and the rail length in other handover areas along the high-speed rail line may be deduced in the same manner. The mapping relationship between the antenna down-tilt and the rail length in all handover areas may be stored in a database, or stored through other ways, so that the antenna down-tilt size needed to be adjusted may be determined by searching the database after a handover area size needed to be adjusted, that is, a corresponding rail length, is obtained.

The value of the above mapping relationship between the antenna down-tilt and the rail length in each handover area may be set based on actual conditions, and the specific example used herein is not used to limit the present disclosure.

After the required handover area range of the target handover area which the train is about to enter is calculated, the required handover area range of the target handover area which the train is about to enter may be compared with the current handover area range of the target handover area. If the required handover area range of the target handover area which the train is about to enter is greater than the current handover area range of the target handover area, the handover area size ΔH needed to be adjusted may be determined based on the difference ΔH=H₁-H₂ between the required handover area range H₁ of the target handover area which the train is about to enter and the current handover area range H₂ of the target handover area. The antenna down-tilt size needed to be expanded may be determined based on the mapping relationship between the handover area size and the antenna down-tilt. Based on the antenna down-tilt size needed to be expanded, the overlapped edges of the two neighbor cells corresponding to the target handover area may be expanded by the same distance simultaneously, so as to increase the handover area range of the target handover area. Since transceivers of neighbor base stations probably are not located on the same horizontal line, the adjustment size for the antenna down-tilt of two neighbor cells may be different; however, the distances expanded by the overlapped edges may be the same. For example, the obtained ΔH is e.g., 0.1km, the ranges of the neighbor Cells a and b may need to be expanded by 0.05km respectively. It may be understood that the value of the ΔH may be flexibly set based on specific conditions, the above value is merely to illustrate the present disclosure, not to limit the present disclosure.

If the required handover area range of the target handover area which the train is about to enter is less than the current handover area range of the target handover area, the handover area size ΔH needed to be adjusted may be determined based on the difference ΔH=H₂-H₁ between the handover area range H₁ required by the target handover area which the train is about to enter and the current handover area range H₂ of the target handover area. The antenna down-tilt size needed to be shortened may be determined based on the mapping relationship between the handover area size and the antenna down-tilt. For example, the overlapped edges of the two neighbor cell channels corresponding to the target handover area may be shortened by the same distance simultaneously, so as to reduce the handover area range of the target handover area. If the required handover area range of the target handover area which the train is about to enter is equal to the current handover area range of the target handover area, it may be not needed to adjust the handover area range of the target handover area. In this embodiment, the antenna down-tilt may be adaptively adjusted based on the required handover area range of the target handover area which the train is about to enter, thereby realizing the dynamic adjustment of the handover area range of the target handover area and providing an appropriate target handover area for trains with different speeds.

Taking Fig. 2 for example, the handover area range after adjustment is greater than the handover area range before adjustment, that is, the antenna down-tilt is to be expanded. Assuming ΔH=H _{post-adjustment}-H_{pre-adjustment}, then the rail length to be adjusted for each base station is ΔH/2. The current antenna down-tilt of the base station 1 is e.g., α₁, it may be known from the above Table 1 that the handover area corresponding to the current base station 1 is a first handover area and the rail length corresponding to the antenna down-tilt α₁ corresponding to the first handover area is X₁. Therefore, based on angle calculation, it may be determined that the angle needed to be expanded for the antenna down-tilt of the base station 1 is θ₁=arctg((X₁+ΔH/₂)/D)- α₁. The current antenna down-tilt of the base station 2 is e.g., α₂, it may be known from the above Table 1 that the handover area corresponding to the current base station 2 is the first handover area and the rail length corresponding to the antenna down-tilt α₂ corresponding to the first handover area is X₂. Therefore, based on angle calculation, it may be determined that the angle needed to be expanded for the antenna down-tilt of the base station 2 is θ₂=arctg((X₂+ΔH/₂)/D)- α₂.

It should be noted that the handover area range of the target handover area and the adjustment range of the antenna down-tilt may be respectively limited in order to make the configuration of the target handover area reasonable and effective. Taking the adjustment of the target handover range of one cell for example, the running speed of the train is e.g., 300km/h, the duration needed when the train runs from one cell to another cell is e.g., 3 seconds, then the preset cell handover duration may be 6 seconds, and the limits may be calculated as follows: Hmin=300 × 3/3600=0.25km, and Hmax=300 × 6/3600=0.5km. Herein, Hmin may be used to limit the minimum range of the target handover area, and Hmax may be used to limit the maximum range of the target handover area. In this embodiment, it may be determined that the handover area range of the target handover area is [0.25km, 0.5km]. It may be understood that the value of the ΔH may be flexibly set based on specific conditions, and the above value is merely to illustrate the present disclosure not to limit the present disclosure. In Fig. 2, taking the adjustment of one antenna down-tilt for example, the angle size needed to be adjusted for the antenna down-tilt is θ, then the adjustment range of θ may be set as: [0, arctg(Hmax)/D-arctg(ΔH /2+Hmin)/D], where D is the vertical distance between the transceiver of the base station and the rail line, ΔH is the above mentioned handover area size needed to be adjusted. The adjustment range of θ may be set as a fixed range value. It may be appreciated that the value of the adjustment range of the antenna down-tilt above may be flexibly set based on specific conditions and the specific example used herein is not used to limit the present disclosure.

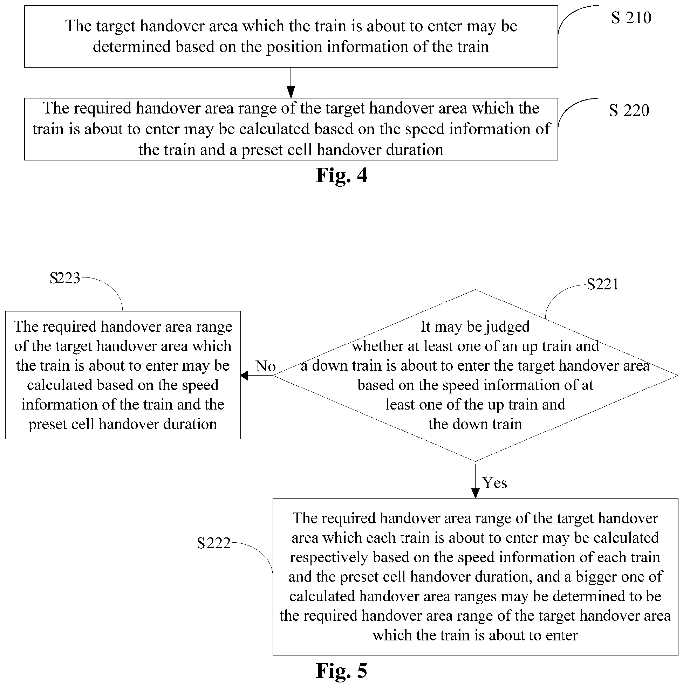

In an embodiment, as shown in Fig. 4, based on the above embodiment, in the method for adjusting the handover area in this embodiment, the above S200 may include the following acts S210 and S220.

At act S210, the target handover area which the train is about to enter may be determined based on the position information of the train.

At act S220, the required handover area range of the target handover area which the train is about to enter may be calculated based on the speed information of the train and a preset cell handover duration.

After the train starts, the position information of the train, for example, the longitude and latitude information of the train, may be acquired. Based on a comparison between the information about the longitude and latitude where the train is located currently and the stored longitude and latitude information, it may be judged whether the train is about to enter a handover area, the sequence number of the handover area to be entered may be recorded, and the handover area corresponding to the sequence number may be defined as the target handover area. It may be understood that, in the comparison between the information about the longitude and latitude where the train is located currently and the stored longitude and latitude information, if there is a handover area within a preset distance to the current position of the train in the running line of the train, it may be determined that the train is about to enter this handover area. Then based on the existing longitude and latitude information of the handover area, the sequence number of the handover area to be entered may be determined. The required target handover area range may be calculated and adjusted before the train enters the target handover area, so that user terminals in a private network may successfully hand over from one cell to another cell. After it is determined based on the longitude and latitude information of the train that the train is about to enter the target handover area, the required handover area range of the target handover area which the train is about to enter may be calculated based on the speed information of the train in conjunction with a preset cell handover duration.

It should be noted that the cell handover duration may refer to the duration needed when user terminals in a private network hand over from one cell to another cell. Considering the complexity of wireless environments, in order to ensure that the user terminals on the train can successfully hand over from one cell to another cell and that the system has sufficient time to attempt a second handover after the system fails in the first handover, while the cell handover duration is set, the preset cell handover duration may be set to be longer than the actual duration needed by handover from one cell to another cell. For example, the duration needed when the train runs from one cell to another cell is e.g., 3 seconds, the preset cell handover duration may be e.g., 7 seconds. It may be understood that the value of the preset cell handover duration may be flexibly set based on specific conditions and the specific example used herein is not used to limit the present disclosure.

For example, assuming the running speed of the train is recorded as V when the distance between the train and the target handover area is 1km, and assuming the preset cell handover duration is T, then based on the calculation formula H=VxT for the required handover area size based on the train speed and the handover time, the handover area range H required by the target handover area which the train is about to enter may be calculated. Then, the train compares the required handover area range of the target handover area which the train is about to enter with the current handover area range of the target handover area, if the two ranges are not equal or are not in an allowed deviation range, the handover area range of the target handover area may be adjusted, so as to ensure that the handover area range of the target handover area is large enough for the user terminals on the train to hand over from one cell to another cell. If the ranges are equal or are in the allowed deviation range, it may be not needed to adjust the handover area range of the target handover area. The allowed deviation range may be set based on specific conditions, and no further limitation is made here. When it is determined based on the speed information of the train and the current position information that the train will enter the target handover area in 10 seconds, the required handover area range of the target handover area which the train is about to enter may be calculated and the target handover area may be correspondingly adjusted.

The method for acquiring train information, the calculation principle and the dynamic adjustment of the handover area range of the target handover area mentioned above may be set based on actual conditions, and are not limited in the present disclosure. Any result obtained using the above working principle, even by introducing various transformations of the selection of calculation opportunity, the value of the preset cell handover duration and other factors, should be in the scope of protection of the present disclosure.

In an embodiment, as shown in Fig. 5, based on the above embodiment, in the method for adjusting the handover area in this embodiment, the above act S220 may include the following acts S221, and S222 or S223.

At act S221, it may be judged whether at least one of an up train and a down train is about to enter the target handover area based on the speed information of at least one of the up train and the down train.

At act S222, when the up train and the down train are about to enter the target handover area, the required handover area range of the target handover area which each train is about to enter may be calculated respectively based on the speed information of each train and the preset cell handover duration, and a bigger one of calculated handover area ranges may be determined to be the required handover area range of the target handover area which the train is about to enter.

At act S223, when one of the up train and the down train is about to enter the target handover area, the required handover area range of the target handover area which the up train or the down train is about to enter may be calculated based on the speed information of the up train or the down train and the preset cell handover duration.

After the speed information of the train is acquired, up trains and down trains may be distinguished based on the running direction of the train, that is, the train moving towards one direction may be specified as the up train, and the train moving towards the other direction may be specified as the down train. Based on the running speed of the train, it may be judged whether an up train and/or a down train are about to enter the target handover area. When an up train and a down train are about to enter the target handover area, the required handover area range of the target handover area which the up train is about to enter may be calculated based on the formula Hᵤₚ=VᵤₚTᵤₚ based on the speed information of the up train and a preset cell handover duration; the required handover area range of the target handover area which the down train is about to enter may be calculated based on the formula H_{down}=V_{down}T_{down} based on the speed information of the down train and a preset cell handover duration. If the required handover area range Hᵤₚ of the target handover area which the up train is about to enter is greater than the required handover area range H_{down} of the target handover area which the down train is about to enter, the Hᵤₚ may be determined to be the required handover area range of the target handover area which the train is about to enter. If the required handover area range Hᵤₚ of the target handover area which the up train is about to enter is less than the required handover area range H_{down} of the target handover area which the down train is about to enter, the H_{down} may be determined to be the required handover area range of the target handover area which the train is about to enter. If the required handover area range Hᵤₚ of the target handover area which the up train is about to enter is equal to the required handover area range H_{down} of the target handover area which the down train is about to enter, any one of the Hᵤₚ and H_{down} may be determined to be the required handover area range of the target handover area which the train is about to enter. By virtue of the solution, it may be guaranteed that user terminals in a private network may hand over to another cell seamlessly without loss when a train with high speed enters the target handover area.

When only the up train is about to enter the target handover area, the handover area range Hᵤₚ=VᵤₚTᵤₚ required by the target handover area which the up train is about to enter may be calculated based on the speed information of the up train and a preset cell handover duration. Likewise, when only the down train is about to enter the target handover area, the handover area range H_{down}=V_{down}T_{down} required by the target handover area which the down train is about to enter may be calculated based on the speed information of the down train and a preset cell handover duration. In this embodiment, processing may be conducted based on different situations of trains on the target handover area, different handover areas may be provided for trains with different speeds, so that the handover success rate may be improved. It may be understood that the scope of protection of the present disclosure also include the condition that multiple trains enter the same target handover area.

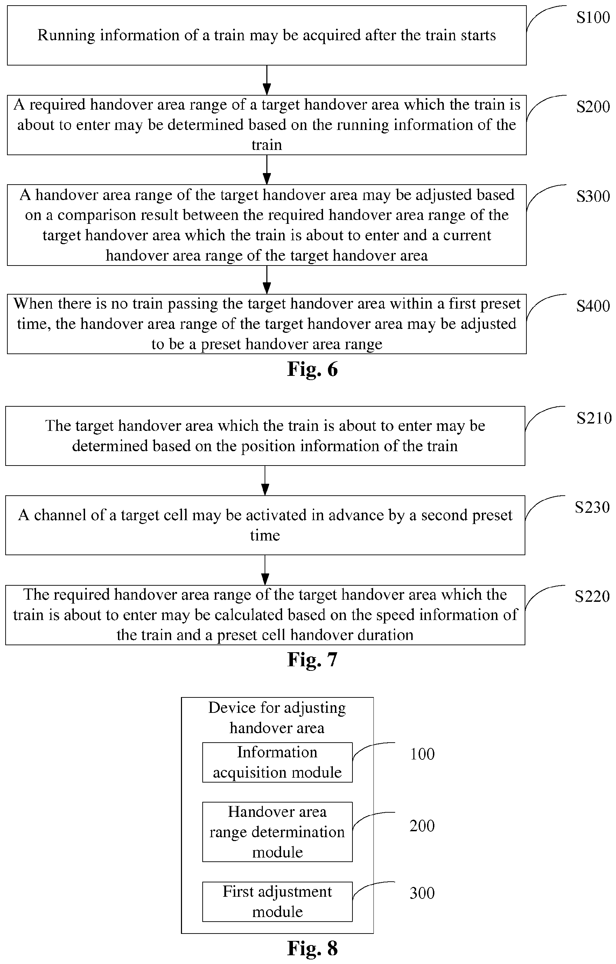

In an embodiment, in order to reduce the mutual interference between the train private network and the public network, the present disclosure also proposes a second embodiment of the method for adjusting the handover area. As shown in Fig. 6, based on the above embodiment, the embodiment of the present disclosure may include the following act S400 after the act S300.

At act S400, when there is no train passing the target handover area within a first preset time, the handover area range of the target handover area may be adjusted to be a preset handover area range.

Since an overlarge range of the handover area may cause mutual interference between the train private network and the public network, the handover area range of the target handover area may be adjusted to be a preset handover area range when there is no train passing the target handover area within a first preset time. The first preset time may be set to 5 minutes, also may be flexibly set based on specific conditions, and no further limitation is made here. In order to make the handover area range of the target handover area relatively small so as to reduce the interference between the private network and the public network while the target handover area is not utilized, the preset handover area range may be set in a following way. In speeds of trains allowed to run on the track of the high-speed rail line, the minimum speed per hour may be input into the calculation formula H=VxT in the above embodiment to obtain the handover area range needed to be set. It may be appreciated that the preset handover area range may be set as a fixed value. It may be understood that the preset handover area range may be flexibly set based on specific conditions and the specific example used herein is not used to limit the present disclosure.

In an embodiment, as shown in Fig. 7, based on the above embodiment, the above act S200 may further include the following act S230.

At act S230, a channel of a target cell may be activated in advance by a second preset time.

The activation of the channel of the target cell may be completed in advance before the train enters the target handover area, so that the time for the user terminals in a private network to hand over to the target cell may be shortened during the high-speed running process of the train. For example, it may be predicted, based on the acquired speed information of the train in conjunction with the current position information of the train, that the train will reach the target handover area in e.g., 5 seconds, and the channel of the target cell may be activated at this moment. This operation may alternatively be executed based on the acquired position information of the train. For example, when the distance between the train and the target handover area is detected to be 0.1km, the channel of the target cell may be activated at this moment. By virtue of this solution, the channel of the target cell may allocate the resources in advance for realizing cell handover, so that the train may quickly complete the handover to the target cell during the high-speed running process. It may be understood that the second preset time may be flexibly set based on specific conditions and the specific example used herein is not used to limit the present disclosure.

Correspondingly, as shown in Fig. 8, a first embodiment of a device for adjusting a handover area of the present disclosure is provided. The device for adjusting the handover area in this embodiment may include: an information acquisition module 100, a handover area range determination module 200 and a first adjustment module 300.

The information acquisition module 100 may be configured to acquire running information of a train after the train starts.

The handover area range determination module 200 may be configured to determine, based on the running information of the train, a required handover area range of a target handover area which the train is about to enter.

The first adjustment module 300 may be configured to adjust the handover area range of the target handover area based on a comparison result between the required handover area range of the target handover area which the train is about to enter and a current handover area range of the target handover area.

While high-speed rail lines are established, private networks along the rail line may be planned, that is, positions of transceivers and distributions of antennas of base stations may be planned so as to form multiple cells. An overlapped coverage area of every two neighbor cells may form a handover area, and each handover area may correspond to a preset sequence number. As shown in Fig. 2, the overlapped coverage area of Cell a and Cell b may form one handover area.

In order to acquire the running information of the train, a GPS system may be installed on the train. The GPS system may be configured to acquire, after the train starts, running information of the train, such as the position information and speed information of the train, so as to acquire the running state of the train. The running information of the train may alternatively be acquired through a GPS system of a private network user terminal on the train, for example, information such as the current position information and speed information of a mobile phone user on the train may be acquired to serve as the running information of the train. It may be appreciated that the running information of the train may alternatively be acquired through other ways. The position information of the train may be information about the geographic latitude and longitude where the train is located. The information about the latitude and longitude of the range of each cell and the range of each handover area on the high-speed rail line may be stored in a form of one or more lists, or, stored in other ways. Moreover, the range of the cell and the range of the handover area may be updated after being adjusted. The speed information of the train may include the running speed of the train and the running direction of the train. The running direction of the train may be used to judge whether the train is an up train or a down train. For example, after one direction is specified as an up direction of the train, the opposite direction may serve as a down direction of the train. The running information of the train may be acquired in real time through a GPS system, or may be acquired at preset interval. The preset interval may be set based on actual conditions, for example, the preset interval may be set as e.g., 1 second, or other time length.

In addition, the act of acquiring the running information of the train may be implemented in a following manner. When the train starts, the initial position information of the train and the initial running speed information of the train may be reported. During the running process of the train, when the running speed of the train changes, the current running speed information of the train may be reported in time so that the change of the running information of the train may be acquired.

After the running information of the train is obtained, the target handover area, for example, the sequence number of the handover area which the train is about to enter, may be determined based on a result of comparison between the information about the longitude and latitude where the train is located currently and the stored longitude and latitude information, as well as the speed information of the train. The handover area range required when the train enters the target handover area may be calculated. The required handover area range of the target handover area which the train is about to enter may be compared with the current handover area range of the target handover area, and the handover area range of the target handover area may be adjusted based on the comparison result, so that a user terminal of a train private network may successfully hand over from one cell to another cell.

In an embodiment of the present disclosure, after a train starts, running information of the train may be acquired, a target handover area which the train is about to enter may be determined based on the acquired running information of the train, a required handover area range of the target handover area which the train is about to enter may be determined, and a handover area range of the target handover area may be adjusted based on a comparison result between the required handover area range of the target handover area which the train is about to enter and the current handover area range of the target handover area. By virtue of this solution, dynamic adjustment for the handover area range of the target handover area based on different train running speeds may be realized, so that a success rate for handover of user terminals between cells in a train private network may be improved.

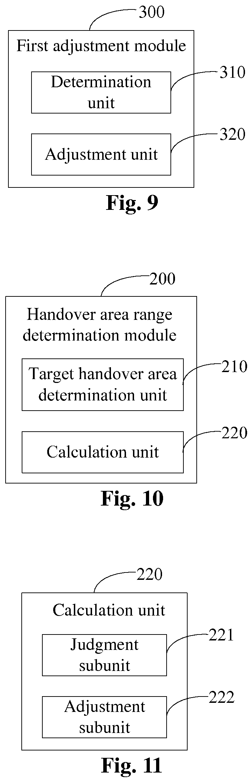

In an embodiment, as shown in Fig. 9, the first adjustment module 300 may include: a determination unit 310 and an adjustment unit 320.

The determination unit 310 may be configured to determine a handover area size needed to be adjusted based on the required handover area range of the target handover area which the train is about to enter and the current handover area range of the target handover area.

The adjustment unit 320 may be configured to adjust an antenna down-tilt corresponding to the target handover area based on the handover area size needed to be adjusted.

Since the environment along the high-speed rail line is complex and vertical distances between transceivers of different base stations and the high-speed rail line may be different, the handover area formed by the overlapped coverage area between every two neighbor cells may be different. Therefore, in this embodiment, it may be suggested to establish in advance a mapping relationship between an antenna down-tilt and a rail length for each handover area in the high-speed rail line based on the high-speed rail line and the antenna distributions. Herein, the rail length may refer to a rail length occupied by a corresponding handover area size, that is, the mapping relationship between the antenna down-tilt and the rail length may be equivalent to the mapping relationship between the antenna down-tilt and the handover area size. In this embodiment, the mapping relationship between the antenna down-tilt and the rail length is set in advance. The mapping relationship between the antenna down-tilt and the rail length may be set based on a corresponding rail length measured according to the value of the corresponding antenna down-tilt in the first handover area A₁, and a corresponding rail length measured according to the value of the corresponding antenna down-tilt in the second handover area A₂. The mapping relationship is as shown in Table 1.

**Table 1: mapping relationship between antenna down-tilt and rail length**

| | | | | | | | |
|---|---|---|---|---|---|---|---|
| First handover area A₁ | Antenna down-tilt | α₁ | α₂ | α₃ | α₄ | α₅ | α₆ |
| | Rail length | X₁ | X₂ | X₃ | X₄ | X₅ | X₆ |
| Second handover area A₂ | Antenna down-tilt | β₁ | β₂ | β₃ | β₄ | β₅ | β₆ |
| | Rail length | Y₁ | Y₂ | Y₃ | Y₄ | Y₅ | Y₆ |

The mapping relationship between the antenna down-tilt and the rail length in other handover areas along the high-speed rail line may be deduced in the same manner. The mapping relationship between the antenna down-tilt and the rail length in all handover areas may be stored in a database, or stored through other ways, so that the antenna down-tilt size needed to be adjusted may be determined by searching the database after a handover area size needed to be adjusted, that is, a corresponding rail length, is obtained.

The value of the above mapping relationship between the antenna down-tilt and the rail length in each handover area may be set based on actual conditions, and the specific example used herein is not used to limit the present disclosure. Any mapping relationship obtained using the above working principle, even by introducing various transformations of the size of the antenna down-tilt, the rail length and other factors, should be in the scope of protection of the present disclosure.

After the required handover area range of the target handover area which the train is about to enter may be calculated, the required handover area range of the target handover area which the train is about to enter may be compared with the current handover area range of the target handover area. If the required handover area range of the target handover area which the train is about to enter is greater than the current handover area range of the target handover area, the handover area size ΔH needed to be adjusted may be determined based on the difference ΔH=H₁-H₂ between the handover area range H₁ required by the target handover area which the train is about to enter and the current handover area range H₂ of the target handover area, and the antenna down-tilt size needed to be expanded may be determined based on the mapping relationship between the handover area size and the antenna down-tilt. Based on the antenna down-tilt size needed to be expanded, the overlapped edges of the two neighbor cells corresponding to the target handover area may be expanded by the same distance simultaneously, so as to increase the handover area range of the target handover area. Since transceivers of neighbor base stations probably are not located on the same horizontal line, the adjustment size for the antenna down-tilt of two neighbor cells may be different; however, the distances expanded by the overlapped edges may be the same. For example, the obtained ΔH is e.g., 0.1km, the ranges of the neighbor Cells a and b may need to be expanded by 0.05km respectively. It may be understood that the value of the ΔH may be flexibly set based on specific conditions, the above value is merely to illustrate the present disclosure, not to limit the present disclosure.

If the required handover area range of the target handover area which the train is about to enter is less than the current handover area range of the target handover area, the handover area size ΔH needed to be adjusted may be determined based on the difference ΔH=H₂-H₁ between the handover area range H₁ required by the target handover area which the train is about to enter and the current handover area range H₂ of the target handover area, and the antenna down-tilt size needed to be shortened may be determined based on the mapping relationship between the handover area size and the antenna down-tilt. For example, the overlapped edges of the two neighbor cell channels corresponding to the target handover area may be shortened by the same distance simultaneously, so as to reduce the handover area range of the target handover area. If the required handover area range of the target handover area which the train is about to enter is equal to the current handover area range of the target handover area, it may be not needed to adjust the handover area range of the target handover area. In this embodiment, the antenna down-tilt may be adaptively adjusted based on the required handover area range of the target handover area which the train is about to enter, thereby realizing the dynamic adjustment of the handover area range of the target handover area and providing an appropriate target handover area for trains with different speeds.

Taking Fig. 2 for example, the handover area range after adjustment is greater than the handover area range before adjustment, that is, the antenna down-tilt is to be expanded. Assuming ΔH=H _{post-adjustment}-H_{pre-adjustment}, then the rail length to be adjusted for each base station is ΔH/2. The current antenna down-tilt of the base station 1 is e.g., α₁, it may be known from the above Table 1 that the handover area corresponding to the current base station 1 is a first handover area and the rail length corresponding to the antenna down-tilt α₁ corresponding to the first handover area is X₁. Therefore, based on angle calculation, it may be determined that the angle needed to be expanded for the antenna down-tilt of the base station 1 is θ₁=arctg((X₁+ΔH/₂)/D)- α₁. The current antenna down-tilt of the base station 2 is e.g., α₂, it may be known from the above Table 1 that the handover area corresponding to the current base station 2 is the first handover area and the rail length corresponding to the antenna down-tilt α₂ corresponding to the first handover area is X₂. Therefore, based on angle calculation, it may be determined that the angle needed to be expanded for the antenna down-tilt of the base station 2 is θ₂=arctg((X₂+ΔH/₂)/D)- α₂.

It should be noted that the handover area range of the target handover area and the adjustment range of the antenna down-tilt may be respectively limited in order to make the configuration of the target handover area reasonable and effective. Taking the adjustment of the target handover range of one cell for example, the running speed of the train is e.g., 300km/h, the duration needed when the train runs from one cell to another cell is e.g., 3 seconds, then the preset cell handover duration may be 6 seconds, and the limits may be calculated as follows: Hmin=300 × 3/3600=0.25km, and Hmax=300 × 6/3600=0.5km. Herein, Hmin may be used to limit the minimum range of the target handover area, and Hmax may be used to limit the maximum range of the target handover area. In this embodiment, it may be determined that the handover area range of the target handover area is [0.25km, 0.5km]. It may be understood that the value of the ΔH may be flexibly set based on specific conditions, and the above value is merely to illustrate the present disclosure not to limit the present disclosure. In Fig. 2, taking the adjustment of one antenna down-tilt for example, the angle size needed to be adjusted for the antenna down-tilt is θ, then the adjustment range of θ may be set as: [0, arctg(Hmax)/D-arctg(ΔH /2+Hmin)/D], where D is the vertical distance between the transceiver of the base station and the rail line, ΔH is the above mentioned handover area size needed to be adjusted. The adjustment range of θ may be set as a fixed range value. It may be appreciated that the value of the adjustment range of the antenna down-tilt above may be flexibly set based on specific conditions and the specific example used herein is not used to limit the present disclosure.

In an embodiment, as shown in Fig. 10, the handover area range determination module 200 may include: a target handover area determination unit 210 and a calculation unit 220.

The target handover area determination unit 210 may be configured to determine, based on the position information of the train, the target handover area which the train is about to enter.

The calculation unit 220 may be configured to calculate, based on the speed information of the train and the preset cell handover duration, the required handover area range of the target handover area which the train is about to enter.

After the train starts, the position information of the train, for example, the longitude and latitude information of the train, may be acquired. Based on a comparison between the information about the longitude and latitude where the train is located currently and the stored longitude and latitude information, it may be judged whether the train is about to enter a handover area, the sequence number of the handover area to be entered may be recorded, and the handover area corresponding to the sequence number may be defined as the target handover area. It may be understood that, in the comparison between the information about the longitude and latitude where the train is located currently and the stored longitude and latitude information, if there is a handover area within a preset distance to the current position of the train in the running line of the train, it may be determined that the train is about to enter this handover area. Then based on the existing longitude and latitude information of the handover area, the sequence number of the handover area to be entered may be determined. The required target handover area range may be calculated and adjusted before the train enters the target handover area, so that user terminals in a private network may successfully hand over from one cell to another cell. After it is determined based on the longitude and latitude information of the train that the train is about to enter the target handover area, the required handover area range of the target handover area which the train is about to enter may be calculated based on the speed information of the train in conjunction with a preset cell handover duration.

It should be noted that the cell handover duration may refer to the duration needed when user terminals in a private network hand over from one cell to another cell. Considering the complexity of wireless environments, in order to ensure that the user terminals on the train can successfully hand over from one cell to another cell and that the system has sufficient time to attempt a second handover after the system fails in the first handover, while the cell handover duration is set, the preset cell handover duration may be set to be longer than the actual duration needed by handover from one cell to another cell. For example, the duration needed when the train runs from one cell to another cell is e.g., 3 seconds, the preset cell handover duration may be e.g., 7 seconds. It may be understood that the value of the preset cell handover duration may be flexibly set based on specific conditions and the specific example used herein is not used to limit the present disclosure.

For example, assuming the running speed of the train is recorded as V when the distance between the train and the target handover area is 1km, and assuming the preset cell handover duration is T, then based on the calculation formula H=VxT for the required handover area size based on the train speed and the handover time, the handover area range H required by the target handover area which the train is about to enter may be calculated. Then, the train compares the required handover area range of the target handover area which the train is about to enter with the current handover area range of the target handover area, if the two ranges are not equal or are not in an allowed deviation range, the handover area range of the target handover area may be adjusted, so as to ensure that the handover area range of the target handover area is large enough for the user terminals on the train to hand over from one cell to another cell. If the ranges are equal or are in the allowed deviation range, it may be not needed to adjust the handover area range of the target handover area. The allowed deviation range may be set based on specific conditions, and no further limitation is made here. When it is determined based on the speed information of the train and the current position information that the train will enter the target handover area in 10 seconds, the required handover area range of the target handover area which the train is about to enter may be calculated and the target handover area may be correspondingly adjusted.

The method for acquiring train information, the calculation principle and the dynamic adjustment of the handover area range of the target handover area mentioned above may be set based on actual conditions, and are not limited in the present disclosure. Any result obtained using the above working principle, even by introducing various transformations of the selection of calculation opportunity, the value of the preset cell handover duration and other factors, should be in the scope of protection of the present disclosure.

In an embodiment, as shown in Fig. 11, the calculation unit 220 may include: a judgment subunit 221 and an adjustment subunit 222.

The judgment subunit 221 may be configured to judge whether at least one of an up train and a down train is about to enter the target handover area based on the speed information of the train.

The adjustment subunit 222 may be configured to: when the up train and the down train are about to enter the target handover area, respectively calculate, based on the speed information of each train and the preset cell handover duration, the required handover area range of the target handover area which each train is about to enter, and determine a bigger one of calculated handover area ranges to be the required handover area range of the target handover area which the train is about to enter.

Alternatively, the adjustment subunit 222 may be configured to: when one of the up train and the down train is about to enter the target handover area, calculate, based on the speed information of the up train or the down train and the preset cell handover duration, the required handover area range of the target handover area which the train is about to enter.

After the speed information of the train is acquired, up trains and down trains may be distinguished based on the running direction of the train, that is, the train moving towards one direction may be specified as the up train, and the train moving towards the other direction may be specified as the down train. Based on the running speed of the train, it may be judged whether an up train and/or a down train are about to enter the target handover area. When an up train and a down train are about to enter the target handover area, the required handover area range of the target handover area which the up train is about to enter may be calculated based on the formula Hᵤₚ=VᵤₚTᵤₚ based on the speed information of the up train and a preset cell handover duration; the required handover area range of the target handover area which the down train is about to enter may be calculated based on the formula H_{down}=V_{down}T_{down} based on the speed information of the down train and a preset cell handover duration. If the required handover area range Hᵤₚ of the target handover area which the up train is about to enter is greater than the required handover area range H_{down} of the target handover area which the down train is about to enter, the Hᵤₚ may be determined to be the required handover area range of the target handover area which the train is about to enter. If the required handover area range Hᵤₚ of the target handover area which the up train is about to enter is less than the required handover area range H_{down} of the target handover area which the down train is about to enter, the H_{down} may be determined to be the required handover area range of the target handover area which the train is about to enter. If the required handover area range Hᵤₚ of the target handover area which the up train is about to enter is equal to the required handover area range H_{down} of the target handover area which the down train is about to enter, any one of the Hᵤₚ and H_{down} may be determined to be the required handover area range of the target handover area which the train is about to enter. By virtue of the solution, it may be guaranteed that user terminals in a private network may hand over to another cell seamlessly without loss when a train with high speed enters the target handover area.

When only the up train is about to enter the target handover area, the handover area range Hᵤₚ=VᵤₚTᵤₚ required by the target handover area which the up train is about to enter may be calculated based on the speed information of the up train and a preset cell handover duration. Likewise, when only the down train is about to enter the target handover area, the handover area range H_{down}=V_{down}T_{down} required by the target handover area which the down train is about to enter may be calculated based on the speed information of the down train and a preset cell handover duration. In this embodiment, processing may be conducted based on different situations of trains on the target handover area, different handover areas may be provided for trains with different speeds, so that the handover success rate may be improved. It may be understood that the scope of protection of the present disclosure also include the condition that multiple trains enter the same target handover area.

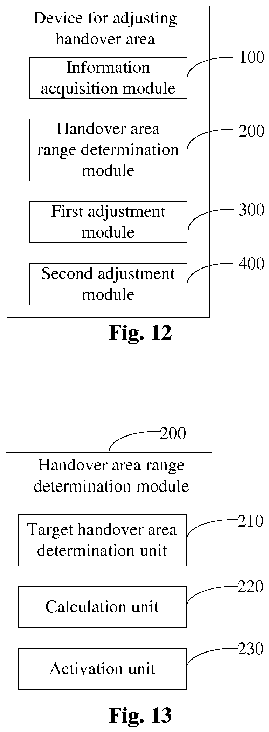

In an embodiment, in order to reduce the mutual interference between the train private network and the public network, the present disclosure also proposes a second embodiment of the device for adjusting the handover area. As shown in Fig. 12, based on the above embodiment, the device for adjusting the handover area may further include a second adjustment module 400.

The second adjustment module 400 may be configured to: when there is no train passing the target handover area within a first preset time, adjust the handover area range of the target handover area to be a preset handover area range.

Since an overlarge range of the handover area may cause mutual interference between the train private network and the public network, the handover area range of the target handover area may be adjusted to be a preset handover area range when there is no train passing the target handover area within a first preset time. The first preset time may be set to 5 minutes, also may be flexibly set based on specific conditions, and no further limitation is made here. In order to make the handover area range of the target handover area relatively small so as to reduce the interference between the private network and the public network while the target handover area is not utilized, the preset handover area range may be set in a following way. In speeds of trains allowed to run on the track of the high-speed rail line, the minimum speed per hour may be input into the calculation formula H=VxT in the above embodiment to obtain the handover area range needed to be set. It may be appreciated that the preset handover area range may be set as a fixed value. It may be understood that the preset handover area range may be flexibly set based on specific conditions and the specific example used herein is not used to limit the present disclosure.

In an embodiment, as shown in Fig. 13, the handover area range determination module 200 may further include an activation module 230.

The activation module 230 may be configured to activate a channel of a target cell in advance by a second preset time.

It should be noted that modules shown in Fig. 8 to Fig. 13 may be realized by a Micro-programmed Control Unit (MCU), a processor, a Field Programmable Gate Array (FPGA) or an Application Specific Integrated Circuit (ASIC).

The activation of the channel of the target cell may be completed in advance before the train enters the target handover area, so that the time for the user terminals in a private network to hand over to the target cell may be shortened during the high-speed running process of the train. For example, it may be predicted, based on the acquired speed information of the train in conjunction with the current position information of the train, that the train will reach the target handover area in e.g., 5 seconds, and the channel of the target cell may be activated at this moment. This operation may alternatively be executed based on the acquired position information of the train. For example, when the distance between the train and the target handover area is detected to be 0.1km, the channel of the target cell may be activated at this moment. By virtue of this solution, the channel of the target cell may allocate the resources in advance for realizing cell handover, so that the train may quickly complete the handover to the target cell during the high-speed running process. It may be understood that the second preset time may be flexibly set based on specific conditions and the specific example used herein is not used to limit the present disclosure.

Still another embodiment of the present disclosure provides a computer storage medium, storing an executable instruction that is configured to execute the method for adjusting the handover area described above.

The ordinary skilled in this field may understand that: all or part of acts for implementing the above method embodiments may be completed through hardware related to program instructions. The program may be stored in a computer readable storage medium, and when being executed, may implement the acts including the above method embodiments. The storage medium may include various mediums capable of storing program codes, such as mobile storage device, Random Access Memory (RAM), Read-Only Memory (ROM), disk or compact disk.

Or, when the above mentioned integrated modules or units of the present disclosure are realized in the form of software function modules and are sold or used as an independent product, they may be stored in computer readable storage medium. Based on this understanding, the scheme of the embodiment of the present disclosure or the part making a contribution to the existing technology on essence may be embodied in the form of software product. This computer software product may be stored in a storage medium, and may include a number of instructions that enables a computer device (which might be a computer, a server or a network device, etc.) to execute part or the entirety of the method described in each embodiment of the present disclosure. The aforementioned storage medium may include various mediums capable of storing program codes, such as USB flash disk, mobile hard disk, ROM, RAM, diskette or compact disc.

The above are the specific embodiments of the present disclosure. However, the protection scope of the present disclosure is not limited to the embodiments. Any variations or substitutions easily produced by one skill familiar with the technical field are intended to fall within the scope of protection of the present disclosure. Therefore, the scope of protection of the present disclosure should be based on the protection scope of the claims appended herein.

## Claims

1. A method for adjusting a handover area, carried out by a device for adjusting a handover area, the method comprising:
acquiring running information of a train after the train starts (S100), wherein the running information of the train comprises position information and speed information of the train;
determining, based on the running information of the train, a required handover area range of a target handover area which the train is about to enter (S200);
adjusting a handover area range of the target handover area based on a comparison result between the required handover area range of the target handover area which the train is about to enter and a current handover area range of the target handover area (S300), wherein an overlapped coverage area of source and target cell forms the target handover area; and
when there is no train passing the target handover area within a first preset time, adjusting the handover area range of the target handover area to be a preset handover area range (S400).

2. The method for adjusting the handover area as claimed in claim 1, wherein adjusting the handover area range of the target handover area based on the comparison result between the required handover area range of the target handover area which the train is about to enter and the current handover area range of the target handover area (S300) comprises:
determining a handover area size needed to be adjusted based on the required handover area range of the target handover area which the train is about to enter and the current handover area range of the target handover area (S310); and
adjusting antenna down-tilts of the source and target cell corresponding to the target handover area based on the handover area size needed to be adjusted (S320).

3. The method for adjusting the handover area as claimed in claim 2, wherein determining the handover area size needed to be adjusted based on the required handover area range of the target handover area which the train is about to enter and the current handover area range of the target handover area (S310) comprises:
if the required handover area range of the target handover area which the train is about to enter is greater than the current handover area range of the target handover area, determining the handover area size ΔH needed to be adjusted based on the difference ΔH=H₁-H₂ between the required handover area range H₁ of the target handover area which the train is about to enter and the current handover area range H₂ of the target handover area; or
if the required handover area range of the target handover area which the train is about to enter is less than the current handover area range of the target handover area, determining the handover area size ΔH needed to be adjusted based on a difference ΔH=H₂-H₁ between the handover area range H₁ required by the target handover area which the train is about to enter and the current handover area range H₂ of the target handover area.

4. The method for adjusting the handover area as claimed in claim 3, wherein adjusting the antenna down-tilt corresponding to the target handover area based on the handover area size needed to be adjusted (S320) comprises:
determining an angle needed to be raised for the antenna down-tilt of a first base station is θ₁=arctg((X₁+ΔH/2)/D)- α₁, where a current antenna down-tilt of the first base station is α₁, a rail length corresponding to the current antenna down-tilt α₁ corresponding to the target handover area is X₁, D is a vertical distance between a transceiver of the first base station and a rail line; and
determining an angle needed to be raised for the antenna down-tilt of a second base station is θ₂=arctg((X₂+ΔH/2)/D)- α₂, where a current antenna down-tilt of the second base station is α₂, a rail length corresponding to the current antenna down-tilt α₂ corresponding to the target handover area is X₂, D is a vertical distance between a transceiver of the second base station and the rail line.

5. The method for adjusting the handover area as claimed in claim 1, wherein determining, based on the running information of the train, the required handover area range of the target handover area which the train is about to enter (S200) comprises:
determining, based on the position information of the train, the target handover area which the train is about to enter (S210);
calculating, based on the speed information of the train and a preset cell handover duration, the required handover area range of the target handover area which the train is about to enter (S220).

6. The method for adjusting the handover area as claimed in claim 5, wherein calculating, based on the speed information of the train and the preset cell handover duration, the required handover area range of the target handover area which the train is about to enter (S220) comprises:
judging whether at least one of an up train and a down train is about to enter the target handover area based on the speed information of at least one of the up train and the down train (S221);
when the up train and the down train are about to enter the target handover area, respectively calculating, based on the speed information of each train and the preset cell handover duration, the required handover area range of the target handover area which each train is about to enter, and determining a bigger one of calculated handover area ranges to be the required handover area range of the target handover area which the train is about to enter (S222); or,
when one of the up train and the down train is about to enter the target handover area, calculating, based on the speed information of the up train or the down train and the preset cell handover duration, the required handover area range of the target handover area which the up train or the down train is about to enter (S223).

7. The method for adjusting the handover area as claimed in claim 5, wherein after determining, based on the position information of the train, the target handover area which the train is about to enter (S210), the method further comprises:
activating a channel of a target cell in advance by a second preset time (S230).

8. A device for adjusting a handover area, the device comprising:
an information acquisition module (100), which is configured to acquire running information of a train after the train starts, wherein the running information of the train comprises position information and speed information of the train;
a handover area range determination module (200), which is configured to determine, based on the running information of the train, a required handover area range of a target handover area which the train is about to enter;
a first adjustment module (300), which is configured to adjust a handover area range of the target handover area based on a comparison result between the required handover area range of the target handover area which the train is about to enter and a current handover area range of the target handover area, wherein an overlapped coverage area of source and target cell forms the target handover area; and
a second adjustment module (400), which is configured to: when there is no train passing the target handover area within a first preset time, adjust the handover area range of the target handover area to be a preset handover area range.

9. The device for adjusting the handover area as claimed in claim 8, wherein the first adjustment module (300) comprises:
a determination unit (310), which is configured to determine a handover area size needed to be adjusted based on the required handover area range of the target handover area which the train is about to enter and the current handover area range of the target handover area; and
an adjustment unit (320), which is configured to adjust antenna down-tilts of the source and target cell corresponding to the target handover area based on the handover area size needed to be adjusted.

10. The device for adjusting the handover area as claimed in claim 8, wherein the handover area range determination module (200) comprises:
a target handover area determination unit (210), which is configured to determine, based on the position information of the train, the target handover area which the train is about to enter; and
a calculation unit (220), which is configured to calculate, based on the speed information of the train and the preset cell handover duration, the required handover area range of the target handover area which the train is about to enter.

11. The device for adjusting the handover area as claimed in claim 10, wherein the calculation unit (220) comprises:
a judgment subunit (221), which is configured to judge whether at least one of an up train and a down train is about to enter the target handover area based on the speed information of at least one of the up train and the down train;
an adjustment subunit (222), which is configured to: when the up train and the down train are about to enter the target handover area, respectively calculate, based on the speed information of each train and the preset cell handover duration, the required handover area range of the target handover area which each train is about to enter, and determine a bigger one of calculated handover area ranges to be the required handover area range of the target handover area which the train is about to enter; or,
when one of the up train and the down train is about to enter the target handover area, calculate, based on the speed information of the up train or the down train and the preset cell handover duration, the required handover area range of the target handover area which the up train or the down train is about to enter.

12. The device for adjusting the handover area as claimed in claim 10, wherein the handover area range determination module (200) comprises:
an activation unit (230), which is configured to activate a channel of a target cell in advance by a second preset time.

13. A computer storage medium, storing computer instructions which, when executed by a processor, cause the processor to carry out the steps of the method for adjusting the handover area as claimed in any one of claims 1 to 7.

## Patentansprüche

1. Verfahren zum Einstellen einer Handover-Fläche, das von einer Vorrichtung zum Einstellen einer Handover-Fläche ausgeführt wird, wobei das Verfahren Folgendes umfasst:
Erfassen von Laufinformationen eines Zugs nach dem Starten des Zugs (S100), wobei die Laufinformationen des Zugs Positionsinformationen und Geschwindigkeitsinformationen des Zugs umfassen;
Bestimmen eines erforderlichen Handover-Flächenbereichs einer Ziel-Handover-Fläche, in die der Zug im Begriff ist einzufahren, basierend auf den Laufinformationen des Zugs (S200);
Einstellen eines Handover-Flächenbereichs der Ziel-Handover-Fläche basierend auf einem Vergleichsergebnis zwischen dem erforderlichen Handover-Flächenbereich der Ziel-Handover-Fläche, in die der Zug im Begriff ist einzufahren, und einem derzeitigen Handover-Flächenbereich der Ziel-Handover-Fläche (S300), wobei ein überlappender Deckungsbereich der Ursprungs- und Zielzelle die Ziel-Handover-Fläche bildet; und,
wenn innerhalb einer ersten voreingestellten Zeit kein Zug die Ziel-Handover-Fläche passiert, Einstellen des Handover-Flächenbereichs der Ziel-Handover-Fläche derart, dass er ein voreingestellter Handover-Flächenbereich ist (S400).

2. Verfahren zum Einstellen der Handover-Fläche nach Anspruch 1, wobei das Einstellen des Handover-Flächenbereichs der Ziel-Handover-Fläche basierend auf dem Vergleichsergebnis zwischen dem erforderlichen Handover-Flächenbereich der Ziel-Handover-Fläche, in die der Zug im Begriff ist einzufahren, und dem derzeitigen Handover-Flächenbereich der Ziel-Handover-Fläche (S300) Folgendes umfasst:
Bestimmen einer Handover-Flächengröße, die einzustellen ist, basierend auf dem erforderlichen Handover-Flächenbereich der Ziel-Handover-Fläche, in die der Zug im Begriff ist einzufahren, und dem derzeitigen Handover-Flächenbereich der Ziel-Handover-Fläche (S310); und
Einstellen von Antennen-Down-Tilts der Ursprungs- und Zielzelle, die der Ziel-Handover-Fläche entsprechen, basierend auf der Handover-Flächengröße, die einzustellen ist (S320).

3. Verfahren zum Einstellen der Handover-Fläche nach Anspruch 2, wobei das Bestimmen der Handover-Flächengröße, die einzustellen ist, basierend auf dem erforderlichen Handover-Flächenbereich der Ziel-Handover-Fläche, in die der Zug im Begriff ist einzufahren, und dem derzeitigen Handover-Flächenbereich der Ziel-Handover-Fläche (S310) Folgendes umfasst:
wenn der erforderliche Handover-Flächenbereich der Ziel-Handover-Fläche, in die der Zug im Begriff ist, einzufahren, größer als der derzeitige Handover-Flächenbereich der Ziel-Handover-Fläche ist, Bestimmen der Handover-Flächengröße ΔH, die einzustellen ist, basierend auf der Differenz ΔH=H₁-H₂ zwischen dem erforderlichen Handover-Flächenbereich H₁ der Ziel-Handover-Fläche, in die der Zug im Begriff ist einzufahren, und dem derzeitigen Handover-Flächenbereich H₂ der Ziel-Handover-Fläche; oder
wenn der erforderliche Handover-Flächenbereich der Ziel-Handover-Fläche, in die der Zug im Begriff ist einzufahren, kleiner als der derzeitige Handover-Flächenbereich der Ziel-Handover-Fläche ist, Bestimmen der Handover-Flächengröße ΔH, die einzustellen ist, basierend auf einer Differenz ΔH=H₂-H₁ zwischen dem Handover-Flächenbereich H₁, den die Ziel-Handover-Fläche, in die der Zug im Begriff ist einzufahren, erfordert, und dem derzeitigen Handover-Flächenbereich H₂ der Ziel-Handover-Fläche.

4. Verfahren zum Einstellen der Handover-Fläche nach Anspruch 3, wobei das Einstellen des Antennen-Down-Tilts, der der Ziel-Handover-Fläche entspricht, basierend auf der Handover-Flächengröße, die einzustellen ist (S320), Folgendes umfasst:
Bestimmen, dass ein Winkel, der für den Antennen-Down-Tilt einer ersten Basisstation zu erhöhen ist, θ₁=arctg((X₁+ΔH/2)/D)- α₁ ist, wobei ein derzeitiger Antennen-Down-Tilt der ersten Basisstation α₁ ist, eine Gleislänge, die dem derzeitigen Antennen-Down-Tilt α₁ entspricht, der der Ziel-Handover-Fläche entspricht, X₁ ist, D ein vertikaler Abstand zwischen einem Transceiver der ersten Basisstation und einer Bahnstrecke ist; und
Bestimmen, dass ein Winkel, der für den Antennen-Down-Tilt einer zweiten Basisstation zu erhöhen ist, θ2=arctg((X₂+ΔH/2)/D)- α₂ ist, wobei ein derzeitiger Antennen-Down-Tilt der zweiten Basisstation α₂ ist, eine Gleislänge, die dem derzeitigen Antennen-Down-Tilt α₂ entspricht, der der Ziel-Handover-Fläche entspricht, X₂ ist, D ein vertikaler Abstand zwischen einem Transceiver der zweiten Basisstation und der Bahnstrecke ist.

5. Verfahren zum Einstellen der Handover-Fläche nach Anspruch 1, wobei das Bestimmen des erforderlichen Handover-Flächenbereichs der Ziel-Handover-Fläche, in die der Zug im Begriff ist einzufahren, basierend auf den Laufinformationen des Zugs (S200) Folgendes umfasst:
Bestimmen der Ziel-Handover-Fläche, in die der Zug im Begriff ist einzufahren, basierend auf den Positionsinformationen des Zugs (S210);
Berechnen des erforderlichen Handover-Flächenbereichs der Ziel-Handover-Fläche, in die der Zug im Begriff ist einzufahren, basierend auf den Geschwindigkeitsinformationen des Zugs und auf einer voreingestellten Zellen-Handover-Dauer (S220).

6. Verfahren zum Einstellen der Handover-Fläche nach Anspruch 5, wobei das Berechnen des erforderlichen Handover-Flächenbereichs der Ziel-Handover-Fläche, in die der Zug im Begriff ist einzufahren, basierend auf den Geschwindigkeitsinformationen des Zugs und auf der voreingestellten Zellen-Handover-Dauer (S220), Folgendes umfasst:
Beurteilen, ob mindestens einer eines Aufwärtszugs und eines Abwärtszugs im Begriff ist, in die Ziel-Handover-Fläche einzufahren, basierend auf den Geschwindigkeitsinformationen mindestens eines des Aufwärtszugs und des Abwärtszugs (S221);
wenn der Aufwärtszug und der Abwärtszug im Begriff sind, in die Ziel-Handover-Fläche einzufahren, Berechnen jeweils des erforderlichen Handover-Flächenbereichs der Ziel-Handover-Fläche, in die der Zug im Begriff ist einzufahren, basierend auf den Geschwindigkeitsinformation jedes Zugs und auf der voreingestellten Zellen-Handover-Dauer, und Bestimmen eines größeren der berechneten Handover-Flächenbereiche derart, dass er der erforderliche Handover-Flächenbereich der Ziel-Handover-Fläche ist, in die der Zug im Begriff ist einzufahren (S222); oder,
wenn einer des Aufwärtszugs und des Abwärtszugs im Begriff ist, in die Ziel-Handover-Fläche einzufahren, Berechnen des erforderlichen Handover-Flächenbereichs der Ziel-Handover-Fläche, in die der Aufwärtszug oder der Abwärtszug im Begriff ist einzufahren, basierend auf den Geschwindigkeitsinformationen des Aufwärtszugs oder des Abwärtszugs und auf der voreingestellten Zellen-Handover-Dauer (S223).

7. Verfahren zum Einstellen der Handover-Fläche nach Anspruch 5, wobei das Verfahren, nach dem Bestimmen der Ziel-Handover-Fläche, in die der Zug im Begriff ist einzufahren, basierend auf den Positionsinformationen des Zugs (S210) ferner Folgendes umfasst:
Vorabaktivieren eines Kanals einer Zielzelle um eine zweite voreingestellte Zeit (S230).

8. Vorrichtung zum Einstellen einer Handover-Fläche, wobei die Vorrichtung Folgendes umfasst:
ein Informationserfassungsmodul (100), das konfiguriert ist, um Laufinformationen eines Zugs nach dem Starten des Zugs zu erfassen, wobei die Laufinformationen des Zugs Positionsinformationen und Geschwindigkeitsinformationen des Zugs umfassen;
ein Handover-Flächenbereich-Bestimmungsmodul (200), das konfiguriert ist, um basierend auf den Laufinformationen des Zugs einen erforderlichen Handover-Flächenbereich einer Ziel-Handover-Fläche zu bestimmen, in die der Zug im Begriff ist einzufahren;
ein erstes Einstellmodul (300), das konfiguriert ist, um einen Handover-Flächenbereich der Ziel-Handover-Fläche basierend auf einem Vergleichsergebnis zwischen dem erforderlichen Handover-Flächenbereich der Ziel-Handover-Fläche, in die der Zug im Begriff ist einzufahren, und einem derzeitigen Handover-Flächenbereich der Ziel-Handover-Fläche einzustellen, wobei ein überlappender Deckungsbereich der Ursprungs- und Zielzelle den Ziel-Handover-Fläche bildet; und
ein zweites Einstellmodul (400), das konfiguriert ist, um: wenn innerhalb einer ersten voreingestellten Zeit kein Zug die Ziel-Handover-Fläche passiert, den Handover-Flächenbereich der Ziel-Handover-Fläche derart einzustellen, dass er ein voreingestellter Handover-Flächenbereich ist.

9. Vorrichtung zum Einstellen der Handover-Fläche nach Anspruch 8, wobei das erste Einstellmodul (300) Folgendes umfasst:
eine Bestimmungseinheit (310), die konfiguriert ist, um eine Handover-Flächengröße, die einzustellen ist, basierend auf dem erforderlichen Handover-Flächenbereich der Ziel-Handover-Fläche, in die der Zug im Begriff ist, einzufahren, und dem derzeitigen Handover-Flächenbereich der Ziel-Handover-Fläche zu bestimmen; und
eine Einstelleinheit (320), die konfiguriert ist, um Antennen-Down-Tilts der Ursprungs- und Zielzelle, die der Ziel-Handover-Fläche entsprechen, basierend auf der Handover-Flächengröße, die einzustellen ist, einzustellen.

10. Vorrichtung zum Einstellen der Handover-Fläche nach Anspruch 8, wobei das Handover-Flächenbereich-Bestimmungsmodul (200) Folgendes umfasst:
ein Ziel-Handover-Flächen-Bestimmungsmodul (210), das konfiguriert ist, um basierend auf den Positionsinformationen des Zugs die Ziel-Handover-Fläche, in die der Zug im Begriff ist einzufahren, zu bestimmen; und
eine Berechnungseinheit (220), die konfiguriert ist, um basierend auf den Geschwindigkeitsinformationen des Zugs und auf der voreingestellten Zellen-Handover-Dauer den erforderlichen Handover-Flächenbereich der Ziel-Handover-Fläche, in die der Zug im Begriff ist einzufahren, zu berechnen.

11. Vorrichtung zum Einstellen der Handover-Fläche nach Anspruch 10, wobei die Berechnungseinheit (220) Folgendes umfasst:
eine Beurteilungsuntereinheit (221), die konfiguriert ist, um basierend auf den Geschwindigkeitsinformationen mindestens eines des Aufwärtszugs und des Abwärtszugs zu beurteilen, ob mindestens einer eines Aufwärtszugs und eines Abwärtszugs im Begriff ist, in die Ziel-Handover-Fläche einzufahren;
eine Einstelluntereinheit (222), die konfiguriert ist, um: wenn der Aufwärtszug und der Abwärtszug im Begriff sind, in die Ziel-Handover-Fläche einzufahren, basierend auf den Geschwindigkeitsinformationen jedes Zugs und auf der voreingestellten Zellen-Handover-Dauer jeweils den erforderlichen Handover-Flächenbereich der Ziel-Handover-Fläche zu berechnen, in die jeder Zug im Begriff ist einzufahren, und einen größeren der berechneten Handover-Flächenbereiche derart zu bestimmen, dass er der erforderliche Handover-Flächenbereich der Ziel-Handover-Fläche ist, in die der Zug im Begriff ist einzufahren; oder, wenn einer des Aufwärtszugs und des Abwärtszugs im Begriff ist, in die Ziel-Handover-Fläche einzufahren, den erforderlichen Handover-Flächenbereich der Ziel-Handover-Fläche, in die der Aufwärtszug oder der Abwärtszug im Begriff ist einzufahren, basierend auf den Geschwindigkeitsinformationen des Aufwärtszugs oder des Abwärtszugs und auf der voreingestellten Zellen-Handover-Dauer zu berechnen.

12. Vorrichtung zum Einstellen der Handover-Fläche nach Anspruch 10, wobei das Handover-Flächenbereich-Bestimmungsmodul (200) Folgendes umfasst:
eine Aktivierungseinheit (230), die konfiguriert ist, um einen Kanal einer Zielzelle um eine zweite voreingestellte Zeit im Voraus zu aktivieren.

13. Computerspeichermedium, das Computeranweisungen speichert, die, wenn sie von einem Prozessor ausgeführt werden, den Prozessor veranlassen, die Schritte des Verfahrens zum Einstellen der Handover-Fläche nach einem der Ansprüche 1 bis 7 auszuführen.

## Revendications

1. Procédé d'ajustement de zone de transfert, mis en œuvre par un dispositif permettant d'ajuster une zone de transfert, le procédé comprenant :
l'acquisition d'informations de circulation d'un train après le démarrage du train (S100), les informations de circulation du train comprenant des informations de position et des informations de vitesse du train ;
la détermination, en fonction des informations de circulation du train, d'une plage de zone de transfert requise d'une zone de transfert cible où le train est sur le point d'entrer (S200) ;
le réglage d'une plage de zone de transfert de la zone de transfert cible en fonction d'un résultat de comparaison entre la plage de zone de transfert requise de la zone de transfert cible où le train est sur le point d'entrer et une plage de zone de transfert actuelle de la zone de transfert cible (S300), la zone de couverture superposée des cellules source et cible constituant la zone de transfert cible ; et
lorsqu'il n'y a pas de train traversant la zone de transfert cible dans un premier temps prédéfini, réglage de la plage de zone de transfert de la zone de transfert cible, afin qu'elle soit une plage de zone de transfert prédéfinie (S400).

2. Procédé d'ajustement de zone de transfert selon la revendication 1, dans lequel le réglage de la plage de la zone de transfert de la zone de transfert cible en fonction du résultat de comparaison entre la plage de zone de transfert requise de la zone de transfert cible où le train est sur le point d'entrer et la plage de zone de transfert actuelle de la zone de transfert cible (S300) comprend :
la détermination d'une taille de zone de transfert qui doit être réglée en fonction de la plage de zone de transfert requise de la zone de transfert cible où le train est sur le point d'entrer et de la plage de zone de transfert actuelle de la zone de transfert cible (S310) ; et
le réglage des inclinaisons de l'antenne des cellules source et cible correspondant à la zone de transfert cible en fonction de la taille de la zone de transfert à régler (S320).

3. Procédé d'ajustement de la zone de transfert selon la revendication 2, dans lequel la détermination de la taille de la zone de transfert, qui doit être réglée en fonction de la plage de zone de transfert requise de la zone de transfert cible où le train est sur le point d'entrer et de la plage de zone de transfert actuelle de la zone de transfert cible (S310), comprend :
si la plage de zone de transfert requise de la zone de transfert cible où le train est sur le point d'entrer est supérieure à la plage de zone de transfert actuelle de la zone de transfert cible, la taille de la zone de transfert ΔH doit être réglée en fonction de la différence ΔH=H₁-H₂, entre la plage de zone de transfert requise H₁ de la zone de transfert cible où le train est sur le point d'entrer et la plage de zone de transfert actuelle H₂ de la zone de transfert cible ; ou
si la plage de zone de transfert requise de la zone de transfert cible où le train est sur le point d'entrer est inférieure à la plage de zone de transfert actuelle de la zone de transfert cible, la taille de la zone de transfert ΔH doit être réglée en fonction d'une différence ΔH=H₂-H₁ entre la plage de zone de transfert H₁ requise par la zone de transfert cible où le train est sur le point d'entrer et la plage de zone de transfert actuelle H₂ de la zone de transfert cible.

4. Procédé d'ajustement de la zone de transfert selon la revendication 3, dans lequel le réglage de l'inclinaison de l'antenne correspondant à la zone de transfert cible en fonction de la taille de la zone de transfert à régler (S320) comprend :
la détermination d'un angle à lever pour l'inclinaison de l'antenne d'une première station de base est θ₁=arctg((X₁+ΔH/ 2)/D)-α₁, où une inclinaison actuelle de l'antenne de la première station de base vaut ai, une longueur du rail correspondant à l'inclinaison actuelle de l'antenne ai correspondant à la zone de transfert cible est égale à X₁, D représente la distance verticale entre un émetteur-récepteur de la première station de base et une ligne de chemin de fer ; et
la détermination d'un angle à lever pour l'inclinaison de l'antenne d'une seconde station de base est θ2=arctg((X₂+ΔH/2)/D)-α₂, où une inclinaison actuelle de l'antenne de la seconde station de base vaut α₂, une longueur de rail correspondant à l'inclinaison de l'antenne actuelle α₂ correspondant à la zone de transfert cible est égale à X₂, D représente une distance verticale entre un émetteur-récepteur de la seconde station de base et la ligne de chemin de fer.

5. Procédé d'ajustement de la zone de transfert selon la revendication 1, dans lequel la détermination, en fonction des informations de circulation du train, de la plage de zone de transfert requise de la zone de transfert cible où le train est sur le point d'entrer (S200) comprend :
la détermination, en fonction des informations de position du train, de la zone de transfert cible où train est sur le point d'entrer (S210) ;
le calcul, en fonction des informations de vitesse du train et d'une durée prédéfinie de transfert de cellule, de la plage de zone de transfert requise de la zone de transfert cible où le train est sur le point d'entrer (S220).

6. Procédé d'ajustement de la zone de transfert selon la revendication 5, dans lequel le calcul, en fonction des informations de vitesse du train et de la durée de transfert de cellule prédéfinie, de la plage de zone de transfert requise de la zone de transfert cible où le train est sur le point d'entrer (S220) consiste à :
évaluer si un train montant et/ou un train descendant est sur le point d'entrer dans la zone de transfert cible, en fonction des informations de vitesse du train montant et/ou du train descendant (S221) ;
lorsque le train montant et le train descendant sont sur le point d'entrer dans la zone de transfert cible, calculer respectivement, en fonction des informations de vitesse de chaque train et de la durée prédéfinie de transfert de cellule, la zone de plage de transfert requise de la zone de transfert cible où chaque train est sur le point d'entrer, et déterminer une plage plus grande parmi les plages de zone de transfert calculées comme étant la plage de zone de transfert requise de la zone de transfert cible où le train est sur le point d'entrer (S222) ; ou,
lorsque l'un parmi le train montant et le train descendant est sur le point d'entrer dans la zone de transfert cible, calculer, en fonction des informations de vitesse du train montant ou du train descendant et de la durée prédéfinie de transfert de cellule, la plage de zone de transfert requise de la zone de transfert cible où le train montant ou le train descendant est sur le point d'entrer (S223).

7. Procédé d'ajustement de la zone de transfert selon la revendication 5, tel qu'après la détermination, en fonction des informations de position du train, de la zone de transfert cible où le train est sur le point d'entrer (S210), le procédé comprend en outre les étapes suivantes :
l'activation d'un canal d'une cellule cible à l'avance, dans un second temps prédéfini (S230).

8. Dispositif d'ajustement de zone de transfert, le dispositif comprenant :
un module d'acquisition d'informations (100), configuré pour acquérir des informations de circulation d'un train après le démarrage du train, les informations de circulation du train comprenant des informations de position et des informations de vitesse du train ;
un module de détermination de plage de zone de transfert (200), configuré pour déterminer, en fonction des informations de circulation du train, une plage de zone de transfert requise d'une zone de transfert cible où le train est sur le point d'entrer ;
un premier module de réglage (300), configuré pour régler une plage de zone de transfert de la zone de transfert cible en fonction d'un résultat de comparaison entre la plage de zone de transfert requise de la zone de transfert cible où le train est sur le point d'entrer et une plage de zone de transfert actuelle de la zone de transfert cible, une zone de couverture superposée de cellules source et cible formant la zone de transfert cible ; et
un second module de réglage (400), configuré pour : quand aucun train ne passe la zone de transfert cible dans un premier temps prédéfini, régler la plage de zone de transfert de la zone de transfert cible afin qu'elle soit une plage de zone de transfert prédéfinie.

9. Dispositif d'ajustement de la zone de transfert selon la revendication 8, dans lequel le premier module d'ajustement (300) comprend :
une unité de détermination (310), configurée pour déterminer une taille de zone de transfert à régler, en fonction de la plage de zone de transfert requise de la zone de transfert cible où le train est sur le point d'entrer, et de la plage de zone de transfert actuelle de la zone de transfert cible ; et
une unité de réglage (320), configurée pour régler les inclinaisons de l'antenne des cellules source et cible correspondant à la zone de transfert cible en fonction de la taille de la zone de transfert à régler.

10. Dispositif d'ajustement de la zone de transfert selon la revendication 8, dans lequel le module de détermination de plage de zone de transfert (200) comprend :
une unité de détermination de zone de transfert cible (210), configurée pour déterminer, en fonction des informations de position du train, la zone de transfert cible où le train est sur le point d'entrer ; et
une unité de calcul (220) configurée pour calculer, en fonction des informations de vitesse du train et de la durée prédéfinie de transfert de cellule, la plage de zone de transfert requise de la zone de transfert cible où le train est sur le point d'entrer.

11. Dispositif d'ajustement de la zone de transfert selon la revendication 10, dans lequel l'unité de calcul (220) comprend :
une sous-unité de jugement (221), configurée pour juger si au moins un train montant et un train descendant est sur le point d'entrer dans la zone de transfert cible en fonction des informations de vitesse du train montant et/ou du train descendant ;
une sous-unité d'ajustement (222), configurée pour : lorsque le train montant et le train descendant sont sur le point d'entrer dans la zone de transfert cible, calculer respectivement, en fonction des informations de vitesse de chaque train et de la durée de transfert de cellule prédéfinie, la plage de zone de transfert requise de la zone de transfert cible où chaque train est sur le point d'entrer et pour déterminer une plus grande des plages de zone de transfert calculées comme étant la plage de zone de transfert requise de la zone de transfert cible où le train est sur le point d'entrer ; ou,
lorsque l'un parmi le train montant et le train descendant est sur le point d'entrer dans la zone de transfert cible, pour calculer, en fonction des informations de vitesse du train montant ou du train descendant et de la durée prédéfinie de transfert de cellule, la plage de zone de transfert requise de la zone de transfert cible où le train montant ou le train descendant est sur le point d'entrer.

12. Dispositif de réglage de la zone de transfert selon la revendication 10, dans lequel le module de détermination de plage de zone de transfert (200) comprend :
une unité d'activation (230), configurée pour activer un canal d'une cellule cible avant un second temps prédéfini.

13. Support de stockage informatique stockant des instructions informatiques qui, lorsqu'elles sont exécutées par un processeur, amènent le processeur à exécuter les étapes du procédé d'ajustement de la zone de transfert selon l'une quelconque des revendications 1 à 7.
